# EUROPEAN PATENT APPLICATION

(11) **EP 4 651 349 A1**
(43) Date of publication of application: **19.11.2025**
(21) Application number: 24175685.7
(22) Date of filing: 14.05.2024
(51) Int. Cl.: H02K 15/00, H02K 17/16

(54) **INDUCTION MOTOR WITH HYBRID ROTOR BARS**

(71) Applicant: ABB SCHWEIZ AG, 5400 Baden (CH)
(72) Inventor: GROP, Henrik, Västerås (SE); JOHANSSON, Erik, Västerås (SE); NORDLUND, Erik, Västerås (SE)
(74) Representative: Kransell & Wennborg KB

(57) **Abstract**

An induction motor (1) comprising: a squirrel cage rotor (5) comprising: a rotor core (9) having a first axial end (9a) and a second axial end (9b), and a plurality of axial rotor slots (9c) extending from the first axial end (9a) to the second axial end (9b), a rotor cage comprising: a plurality of rotor bars arranged in a respective rotor slot (9c), each rotor bar being composed of at least one elongated metal element extending along the respective rotor slot (9c) and cast metal filling up space around all the metal elements in the rotor slot (9c), wherein at each of the first axial end (9a) and the second axial end (9b) of the rotor core (5), the metal elements have connecting portions, each connecting portion extending between two rotor slots (9c) and directly electrically connecting two metal elements arranged in different rotor slots (9c), the connecting portions being arranged such that every metal element in every rotor slot (9c) is directly electrically connected to a metal element in another rotor slot (9c) via a connecting portion at each of the first axial end (9a) and the second axial end (9b), and such that at each of the first axial end (9a) and the second axial end (9b), a connecting portion extends along an end surface of the first axial end (9a) and the second axial end (9b), respectively, between every pair of adjacent rotor slots (9c).

## Description

### TECHNICAL FIELD

The present disclosure generally relates to asynchronous electrical machines.

### BACKGROUND

Squirrel cage induction motors are the work horse of the industry since approximately 120 years. They are robust and cost-efficient motors. The construction includes a stator carrying a poly-phase winding and a rotor with a short-circuited squirrel cage usually comprising either die-cast or machined bars and short circuit rings. Using die-cast bars are more common in low power, small machine applications while machined bars are more common in high power, large machine applications. The reason for this is mainly the difficulty to die cast long rotor bars due to the cooling of the molten material. As the machines grow large, also radial cooling ducts in the rotor are introduced making casting impossible.

By changing the material of the rotor cage, i.e., the bars and short circuit rings, the induction motor obtains different performance in terms of losses and starting characteristics. A low resistivity rotor cage material such as copper results in lower rotor losses compared to a rotor cage material with higher resistivity such as aluminium. It is however complex to cast copper. A low resistivity material will have a break-down torque occurring later than a high resistivity material. The starting torque is higher for a high resistivity material while a lower resistivity material will have a lower starting torque.

US20190140506 A1 discloses a rotor mechanism with a rotor core provided with rotor slots and rotor bars. Aluminium is cast on the rotor core to form end rings together with protruding parts of the rotor bars. The rotor bars are made of copper. The rotor mechanism however has higher losses, without necessarily contributing to higher starting torque, than would be necessary.

### SUMMARY

In view of the above, an object of the present disclosure is to provide an induction motor which solves, or at least mitigates, the problems of the prior art.

There is hence according to a first aspect of the present disclosure provided an induction motor comprising: a squirrel cage rotor comprising: a rotor core having a first axial end and a second axial end, and a plurality of axial rotor slots extending from the first axial end to the second axial end, a rotor cage comprising: a plurality of rotor bars arranged in a respective rotor slot, each rotor bar being composed of at least one elongated metal element extending along the respective rotor slot and cast metal filling up space around all the metal elements in the rotor slot, wherein at each of the first axial end and the second axial end of the rotor core, the metal elements have connecting portions, each connecting portion extending between two rotor slots and directly electrically connecting two metal elements arranged in different rotor slots, the connecting portions being arranged such that every metal element in every rotor slot is directly electrically connected to a metal element in another rotor slot via a connecting portion at each of the first axial end and the second axial end, and such that at each of the first axial end and the second axial end, a connecting portion extends along an end surface of the first axial end and the second axial end, respectively, between every pair of adjacent rotor slots.

The currents at the first and second axial end of the rotor core are able to flow through the connecting portions in the circumferential direction of the rotor core to a greater extent than in the solution disclosed in US20190140506 A1. Therefore, losses in the rotor cage may be reduced, especially if the resistivity of the metal elements, and thus of the connecting portions, is lower than the resistivity of the cast metal.

According to one embodiment each metal element is uninsulated, and wherein in each rotor slot the cast metal is in electrical contact with all metal elements.

According to one embodiment the rotor cage comprises a first end ring arranged at the first axial end of the rotor core and a second end ring arranged at the second axial end of the rotor core, wherein each of the first and the second end rings is formed by the connecting portions, and the cast metal which is cast around and in electrical contact with the connecting portions.

According to one embodiment a majority of the cast metal is arranged radially outside all metal elements in each rotor slot.

According to one embodiment each metal element has a resistivity that differs from a resistivity of the cast metal.

According to one embodiment the metal elements have a lower resistivity than the cast metal.

According to one embodiment the metal elements comprise copper.

According to one embodiment the cast metal comprises aluminium.

According to one embodiment at least some of the rotor bars comprise a plurality of metal elements.

According to one embodiment a first set of the metal elements in rotor slots provided with more than one metal element is led as connecting portions to an adjacent rotor slot in the clockwise direction of the squirrel cage rotor, and a second set of the metal elements is led as connecting portions to an adjacent rotor slot in the counterclockwise direction of the squirrel cage rotor. Compared to a solution in which all the metal elements of one rotor slot are led to the same rotor slot, this configuration increases the presence of the connecting portions at both the first and the second axial end of the rotor core, thus enabling reduced losses.

According to one embodiment the metal element in at least some rotor slots is connected directly via a connecting portion to a metal element in a rotor slot located at least two rotor slots away. An overlap between pairs of connecting portions is thus created. Such overlapping connecting portions may be in direct contact with each other. Compared to a solution in which the metal element is led directly to an adjacent rotor slot, especially in the case of hairpin bars, this configuration increases the presence of the connecting portions at both the first and the second axial end of the rotor core, allowing current to flow through the connecting portions to a greater extent, thus enabling reduced losses, especially if the resistivity of the metal elements is lower than the resistivity of the cast metal. If the overlapping portions are in direct contact with each other, the current can flow uninterrupted for longer stretches without having to pass to the cast metal at the first and second axial ends.

According to one embodiment the metal elements are portions of a metal wire.

According to one embodiment the metal elements are hairpin bars, wherein each hairpin bar has a hairpin bend which forms part of a connecting portion.

According to one embodiment each hairpin bar has a curved portion located in the rotor slot and extending towards and being in mechanical contact with a side surface of the rotor slot or with another hairpin bar in the same rotor slot.

Generally, all terms used in the claims are to be interpreted according to their ordinary meaning in the technical field, unless explicitly defined otherwise herein. All references to "a/an/the element, apparatus, component, means, etc. are to be interpreted openly as referring to at least one instance of the element, apparatus, component, means, etc., unless explicitly stated otherwise.

### BRIEF DESCRIPTION OF THE DRAWINGS

The specific embodiments of the inventive concept will now be described, by way of example, with reference to the accompanying drawings, in which:
Fig. 1 is a schematic longitudinal section of an example of an induction motor;
Fig. 2 schematically shows a perspective view of an example of a squirrel cage rotor;
Fig. 3 shows the squirrel cage rotor in Fig. 2 without end rings;
Fig. 4 shows a partial section of the squirrel cage rotor in Fig 3; and
Fig. 5 shows a cross-sectional detail of a rotor slot and metal elements arranged in the rotor slot according to another example.

### DETAILED DESCRIPTION

The inventive concept will now be described more fully hereinafter with reference to the accompanying drawings, in which exemplifying embodiments are shown. The inventive concept may, however, be embodied in many different forms and should not be construed as limited to the embodiments set forth herein; rather, these embodiments are provided by way of example so that this disclosure will be thorough and complete, and will fully convey the scope of the inventive concept to those skilled in the art. Like numbers refer to like elements throughout the description.

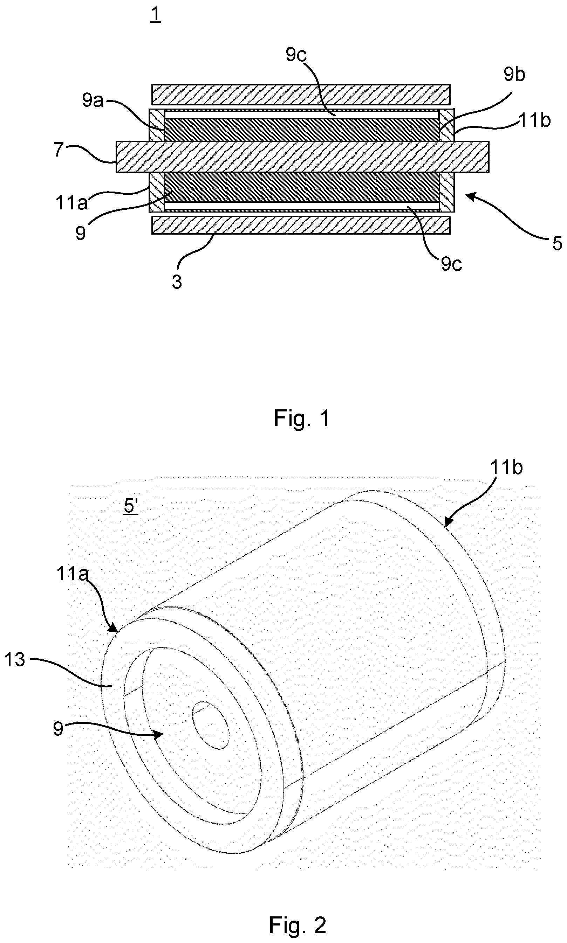

Fig. 1 schematically shows a longitudinal section of an example of an induction motor 1.

The induction motor 1 comprises a stator 3. The induction motor 1 comprises a squirrel cage rotor 5. The squirrel cage rotor 5 is rotatably arranged in the stator 3. The squirrel cage rotor 5 is arranged to electromagnetically interact with the stator 3.

The squirrel cage rotor 5 comprises a rotor shaft 7. The squirrel cage rotor 5 comprises a rotor core 9 fixedly arranged around the rotor shaft 7.

The rotor core 9 has a first axial end 9a, and a second axial end 9b.

The rotor core 9 may be formed of a plurality of metal sheets, such as magnetic steel sheets, stacked one after the other in the axial direction of the rotor shaft 7.

The rotor core 9 comprises a plurality of rotor slots 9c. The rotor slots 9c are axial slots extending from the first axial end 9a to the second axial end 9b of the rotor core 9.

The rotor slots 9c maybe radially closed, i.e., through-openings, as in the example in Fig.1, or they may be radially open, i.e., open channels.

The squirrel cage rotor 5 comprises a rotor cage. The rotor cage comprises a plurality of rotor bars (not shown in Fig. 1). Each rotor bar is arranged in a respective rotor slot 9c.

Each rotor bar is composed of one or more elongated metal element extending along the rotor slot 9c from the first axial end 9a to the second axial end 9b, and of cast metal which fills up space around all metal elements in every rotor slot 9c. The elongated metal element or metal elements may be uninsulated. Preferably, the cast metal fills up all space around all the metal elements in a rotor slot 9c, although this may practically not be possible and voids may be present in the rotor slots 9c. The cast metal is arranged in each rotor slot 9c from the first axial end 9a to the second axial end 9b of the rotor core 9. The cast metal and the one or metal elements in each rotor slot 9c form a hybrid rotor bar.

The metal elements may have a resistivity that differs from the resistivity of the cast metal. For example, the cast metal may have a higher resistivity than the metal elements. As an example, the metal elements may comprise or consist of copper. In one example, the cast metal comprises or consists of aluminium.

In case the cast metal has a higher resistivity than the metal elements, a majority of the cast metal is arranged radially outside of all metal elements in each rotor slot 9c.

The metal elements have connecting portions that protrude from the rotor slots 9c at the first axial end 9a and the second axial end 9b of the rotor core 9. The connecting portions are of the same material as the metal elements. The connecting portions are uninsulated. Each connecting portion, which is shared between two metal elements in different rotor slots 9c, extends between two rotor slots 9c such that there is a direct electrical connection between the two metal elements arranged in different rotor slots 9c. There is thus a continuous conductive path between pairs of metal elements in different rotor slots 9c formed by the connecting portions. The connecting portions are arranged such that there is a connecting portion extending between every pair of adjacent rotor slots 9c along an end surface of the rotor core 9 at both the first axial end 9a and the second axial end gb. The connecting portions may or may not be in direct mechanical contact with the end surface.

The squirrel cage rotor 1 comprises a first end ring 11a and a second end ring 11b. The first end ring 11a is formed of the cast metal and connecting portions arranged at the first axial end 9a of the rotor core 9. The cast metal and the connecting portions at the first axial end 9a are in direct electrical contact. The second end ring 11b is formed of the cast metal and the connecting portions arranged at the second axial end 9b of the rotor core 9. The cast metal and the connecting portions at the second axial end 9b are in direct electrical contact. The first end ring 11a and the second end ring 11b are hybrid end rings, comprising the metal elements and the cast metal.

The first end ring 11a, the second end ring 11b, and the rotor bars may form a single integral body.

According to some examples, some, or all the rotor slots 9c may comprise more than one metal element.

The squirrel cage rotor will now be described with by means of different examples in Figs 2-5.

Fig. 2 shows a squirrel cage rotor 5'. The cast metal 13 of the first end ring 11a and the second end ring 11b, which according to the example forms the outer surfaces of the first end ring 11a and the second end ring 11b can here be seen.

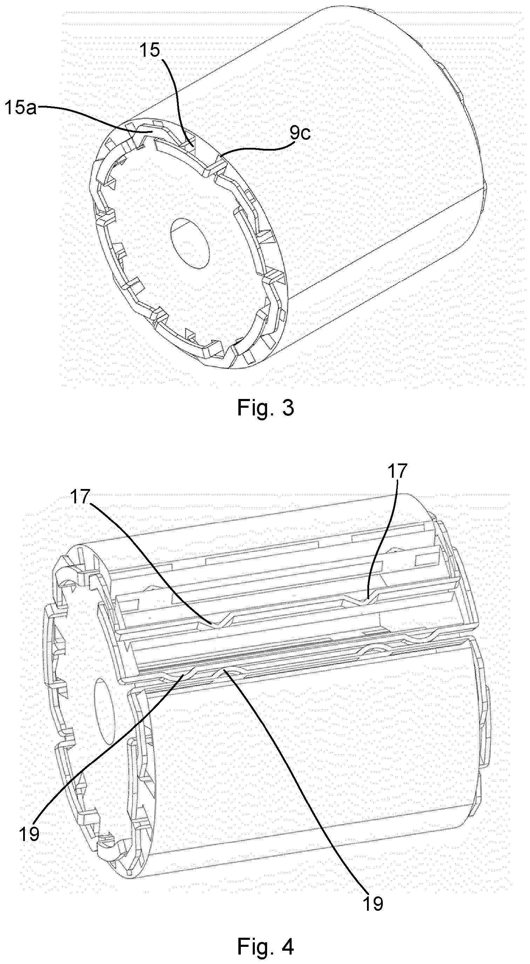

Fig. 3 shows the squirrel cage rotor 5' without the cast metal 13 at the first end ring 11a or the second end ring 11b, to expose the metal elements 15, and the connecting portions 15a.

According to the example, the metal elements 15 are in the form of hairpin bars. The connecting portions 15a are formed by hairpin bends of the hairpin bars.

According to the example, the rotor slots 9c are radially closed. The rotor slots 9c are thus formed by through-openings, or circumferentially closed channels, extending from the first axial end 9a to the second axial end 9b of the rotor core 9.

Every hairpin bar is according to the example electrically connected to a hairpin bar in a rotor slot two slots away by means of a hairpin bend, i.e., with one rotor slot arranged between the two rotor slots containing the two connected hairpin bars.

According to the example, some of the rotor slots 9c comprise two hairpin bars.

All hairpin bars may comprise curved portions 17, 19 arranged in the rotor slots 9c, as shown in Fig. 4. The curved portion 17 of hairpin bars arranged in rotor slots 9c comprising a single hairpin bar extend in the circumferential direction of the rotor core 9 and are in mechanical contact with and may press against a side surface of the rotor slot 9c to maintain the hairpin bar in a fixed position inside the rotor slot 9c. The curved portions 17 restrict axial movement of the hairpin bars during the manufacturing process, e.g., prior to and during casting of the cast metal, when the rotor core 9 is arranged in a vertical position.

In rotor slots 9c comprising two hairpin bars, the curved portions 19 may be axially offset from each other. Each curved portion 19 may extend towards the adjacent hairpin bar in the rotor slot 9c. The function of the curved portions 19 is the same as for the curved portions 17.

In rotor slots 9c comprising two hairpin bars, a first of the hairpin bars has a hairpin bend that extends to another rotor slot 9c in a first circumferential direction of the rotor core 9, and a second of the hairpin bars has a hairpin bend that extends towards to another rotor slot 9c in a second circumferential direction, opposite to the first direction, of the rotor core 9.

According to the example, every third rotor slot 9c may comprise two hairpin bars, and the rest of the rotor slots 9c may comprise a single hairpin bar. Other configurations are however also possible.

It is envisaged, that instead of hairpin bars the metal elements of the embodiment described in Figs 2-4 could be portions of a metal wire. In this case, each rotor slot may comprise a plurality, such as a bundle, of portions of a metal wire.

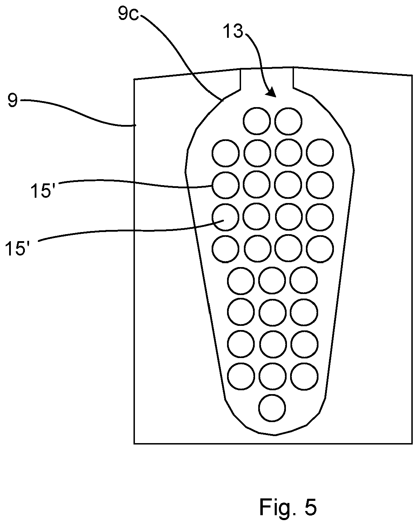

Fig. 5 shows a close-up cross-sectional view of a portion of another example of a squirrel cage rotor. In this example, the rotor slots 9c are radially open, i.e., the rotor slots 9c are grooves or recesses that open from the outer surface of the rotor core 9.

The metal elements 15' are in this example portions of a metal wire or a metal strand. According to the example, every rotor slot 9c is provided with a plurality of metal elements 15', such as a bundle of metal elements 15'. Thus, every rotor bar comprises a plurality of metal elements 15'. Each rotor bar may for example comprise at least 5, at least 10, at least 15, or at least 20 metal elements 15'. In manufacturing, a long metal wire may be wound as a winding, e.g., a random wound winding, with a plurality of turns such that every rotor slot 9c comprises a plurality of sections of the metal wire, together forming a bundle.

At the first axial end and at the second axial end of the rotor core 9, a first set of the metal elements 15' is led as connecting portions to an adjacent rotor slot 9c in the clockwise direction of the squirrel cage rotor. A second set of the metal elements 15' is led as connecting portions to an adjacent rotor slot 9c in the counterclockwise direction of the squirrel cage rotor. For example, the first set and the second set may each contain half of the metal elements 15' arranged in a rotor slot 9c.

The first end ring and the second end ring are formed by the connecting portions and cast metal, as in the previous example.

In a variation of the example in Fig. 5, two hairpin bars may be provided in the rotor slots instead of the metal wire. In this case, one hairpin bar may be connected to the adjacent rotor slot in the clockwise direction of the squirrel cage rotor and the other hairpin bar may be connected to the adjacent rotor slot in the counterclockwise direction of the squirrel cage rotor.

In one variation of any example discussed herein, the cast metal may have a lower resistivity than the metal elements. In this case, the metal elements may be arranged radially outside a majority of the cast metal in every rotor slot. The cast metal may for example comprise or consist of copper, and the metal elements may for example comprise steel, which have a higher melting point than copper.

The inventive concept has mainly been described above with reference to a few examples. However, as is readily appreciated by a person skilled in the art, other embodiments than the ones disclosed above are equally possible within the scope of the inventive concept, as defined by the appended claims.

## Claims

1. Induction motor (1) comprising:
a squirrel cage rotor (5; 5') comprising:
- a rotor core (9) having a first axial end (9a) and a second axial end (9b), and a plurality of axial rotor slots (9c) extending from the first axial end (9a) to the second axial end (9b),
- a rotor cage comprising:
a plurality of rotor bars arranged in respective rotor slots (9c), each rotor bar being composed of at least one elongated metal element (15; 15') extending along the respective rotor slot (9c) and cast metal (13) filling up space around all the metal elements (15; 15') in the rotor slot (9c),
wherein at each of the first axial end (9a) and the second axial end (9b) of the rotor core (5; 5'), the metal elements (15; 15') have connecting portions (15a), each connecting portion (15a) extending between two rotor slots (9c) and directly electrically connecting two metal elements (15; 15') arranged in different rotor slots (9c), the connecting portions (15a) being arranged such that every metal element (15; 15') in every rotor slot (9c) is directly electrically connected to a metal element (15; 15') in another rotor slot (9c) via a connecting portion (15a) at each of the first axial end (9a) and the second axial end (9b), and such that at each of the first axial end (9a) and the second axial end (9b), a connecting portion (15a) extends along an end surface of the first axial end (9a) and the second axial end (9b), respectively, between every pair of adjacent rotor slots (9c).

2. Induction motor (1) as claimed in claim 1, wherein each metal element (15; 15') is uninsulated, and wherein in each rotor slot (9c) the cast metal (13) is in electrical contact with all metal elements (15; 15').

3. Induction motor (1) as claimed in claim 1 or 2, wherein the rotor cage comprises a first end ring (11a) arranged at the first axial end of the rotor core (9) and a second end ring (11b) arranged at the second axial end of the rotor core (9), wherein each of the first and the second end rings (11a, 11b) is formed by the connecting portions (15a), and the cast metal (13) which is cast around and in electrical contact with the connecting portions (15a).

4. Induction motor (1) as claimed in any of the preceding claims, wherein a majority of the cast metal (13) is arranged radially outside all metal elements (15; 15') in each rotor slot (9c).

5. Induction motor (1) as claimed in any of the preceding claims, wherein each metal element (15; 15') has a resistivity that differs from a resistivity of the cast metal (13).

6. Induction motor (1) as claimed in any of the preceding claims, wherein the metal elements (15; 15') have a lower resistivity than the cast metal (13).

7. Induction motor (1) as claimed in any of the preceding claims, wherein the metal elements (15; 15') comprise copper.

8. Induction motor (1) as claimed in any of the preceding claims, wherein the cast metal (13) comprises aluminium.

9. Induction motor (1) as claimed in any of the preceding claims, wherein at least some of the rotor bars comprise a plurality of metal elements (15; 15').

10. Induction motor (1) as claimed in claim 9, wherein a first set of the metal elements (15; 15') in rotor slots (9c) provided with more than one metal element (15; 15') is led as connecting portions (15a) to an adjacent rotor slot (9a) in the clockwise direction of the squirrel cage rotor, and a second set of the metal elements (15; 15') is led as connecting portions to an adjacent rotor slot (9c) in the counterclockwise direction of the squirrel cage rotor.

11. Induction motor as claimed in claim 9, wherein the metal element (15; 15') in at least some rotor slots (9c) is connected directly via a connecting portion to a metal element (15; 15') in a rotor slot located at least two rotor slots (9c) away.

12. Induction motor (1) as claimed in any of the preceding claims, wherein the metal elements (15') are portions of a metal wire.

13. Induction motor (1) as claimed in any of claims 1-11, wherein the metal elements (15) are hairpin bars, wherein each hairpin bar has a hairpin bend which forms part of a connecting portion (15a).

14. Induction motor (1) as claimed in claim 11, wherein each hairpin bar has a curved portion (19) located in the rotor slot (9c) and extending towards and being in mechanical contact with a side surface of the rotor slot (9c) or with another hairpin bar in the same rotor slot (9c).
